# EUROPÄISCHE PATENTSCHRIFT

(11) **EP 1 394 323 B1**
(45) Veröffentlichungstag und Bekanntmachung des Hinweises auf die Patenterteilung: **28.03.2007**
(21) Anmeldenummer: 03019413.8
(22) Anmeldetag: 28.08.2003
(51) Int. Cl.: E01C 11/22, A01G 1/08

(54) **Einfassungselement zur Einfassung und Abgrenzung von Rasenflächen oder Pflasterflächen**
Edge stone for delimiting lawns or sidewalks
Pierre de bordure pour délimiter une pelouse ou une surface pavée

(30) Priorität: 30.08.2002 DE 20213617 U
(43) Veröffentlichungstag der Anmeldung: 03.03.2004
(73) Patentinhaber: Geiger, Peter, 92318 Neumarkt (DE)
(72) Erfinder: Geiger, Peter, 92318 Neumarkt (DE)
(74) Vertreter: Lösch, Christoph Ludwig Klaus

(56) Entgegenhaltungen:
- WO-A-97/29241
- WO-A-02/099197
- DE-U- 8 705 044
- GB-A- 2 038 155
- NL-C- 80 073

## Beschreibung

Die Neuerung betrifft ein Einfassungselement zur Einfassung und Abgrenzung von Rasen- oder Pflasterflächen.

Als Stand der Technik ist aus dem DE 296 02 138 U1 ein Universal-Rasenkanten-Einfassungsstein bekannt, der kurvenförmig oder geradlinig verlegt werden kann, wobei an den Nahtstellen der aneinandergesetzten Einfassungssteine bei kurvenförmiger Verlegung ein verkleinerter Zwischenwinkel auftritt.

Aus DE-U 87 05 044 geht ein Stufenelement zur Abgrenzung von Straßen und Gehwegen hervor, wobei das Stufenelement im Querschnitt etwa L-förmig ausgebildet ist und einen Einlegestein aufweist, der in eine Vertiefung des Stufenelementes eingelegt ist.

Der Neuerung liegt die Aufgabe zugrunde, ein Einfassungselement anzubieten, der besonders variabel einsetzbar ist. Diese Aufgabe wird durch ein Einfassungselement mit den Merkmalen des Schutzanspruchs 1 gelöst. Vorteilhafte Ausführungsformen des Einfassungselementes werden in den Unteransprüchen 2 - 7 realisiert.

Das neuerungsgemäße Einfassungselement zur Einfassung und Abgrenzung von Rasen- oder Pflasterflächen besitzt einen Einfassungsstein mit einem ersten senkrecht verlaufenden Steinbereich sowie einem zweiten waagerecht verlaufenden Steinbereich, der Senkrecht mit dem ersten Steinbereich verbunden ist, so dass der Einfassungsstein einen L-förmigen Querschnitt aufweist, und einen Einlegestein zum Einlegen in eine Vertiefung des Einfassungssteins. Durch die Vertiefung kann der eingelegte Einlegestein formschlüssig und sicher aufgenommen werden und es ergibt sich ein besonders sicherer Stand des neuerungsgemäßen Einfassungssteins.

Neuerungsgemäß weist der Einfassungsstein in seinem ersten Steinbereich im wesentlichen halbkreisförmige Ausnehmungen und Vorsprünge auf, in welche sich korrespondierende Vorsprünge und Ausnehmungen vorheriger oder nachfolgender Einfassungssteine einfügen, um einen formschlüssigen, geradlinigen oder kurvenförmigen Verbund von verlegten und aneinander gereihten Einfassungssteinen zu bilden.

Um einen bogenförmigen Verlegungsverlauf zu erleichtern besitzt der zweite Steinbereich mindestens ein abgeschrägte Kante, wodurch sich benachbarte Einfassungssteine auch in einer Winkelstellung zueinander verlegen lassen.

Neuerungsgemäß besitzt der Einlegestein zum Anschluß an benachbarte Einlegesteine im wesentlichen halbkreisförmige Ausnehmungen und Vorsprünge zur Aufnahme von korrespondierenden Vorsprüngen und Ausnehmungen benachbarter Einlegesteine. Damit besteht bei verlegten und aneinander gereihten Einfassungssteinen mit eingelegten Einlegesteinen sowohl ein formschlüssiger Verbund zwischen aufeinander folgenden Einfassungssteinen als auch zwischen aufeinander folgenden Einlegesteinen.

Der Einlegestein kann sich dabei über die gesamte Länge oder einen Bruchteil davon, z.B. über die halbe Länge des Einfassungssteins erstrecken, um unterschiedliche optische Effekte zu erzielen und eine variable Längenausdehnung zu erreichen.

Bei der Einfassung und Abgrenzung von Rasenflächen bildet die Oberfläche dieses Einlegesteins vorteilhafterweise einen bündigen Übergang zur angrenzenden Rasenfläche. Beim Rasenmähen können die Räder des Rasenmähers auf der Oberfläche des Einlegesteins abrollen, wodurch ein randnahes Mähen ohne Rückstände und ohne die Notwendigkeit eines Nachmähens oder einer Nachbearbeitung (z.B. durch einen Kantenschneider) ermöglicht wird.

Insbesondere in Verbindung mit einem Einlegestein kann der neuerungsgemäße Einfassungsstein als Mähkantenstein dienen und zur besonders praktikablen Einfassung und Abgrenzung von Rasenflächen dienen.

Gemäß einer weiteren vorteilhaften Ausführungsform kann ein weiterer waagerecht verlaufender Steinbereich vorgesehen sein, der ebenfalls L-förmig mit dem ersten Steinbereich verbunden und gegenüberliegend zum zweiten Steinbereich angeordnet ist. Damit bekommt der Einfassungsstein einen T-förmigen Querschnitt und kann z.B. zur beidseitigen Einfassung und Abgrenzung von Rasen- oder Pflasterflächen verwendet werden. Zur beidseitigen Einfassung und Abgrenzung insbesondere von Rasenflächen kann der weitere waagerecht verlaufende Steinbereich ebenfalls eine Vertiefung zur Aufnahme mindestens eines weiteren Pflastersteins, insbesondere eines Einlegesteins aufweisen.

Wenn auf beiden Seiten des Einfassungssteins die Oberflächen der jeweiligen Einlegesteine im wesentlichen bündig mit den sich anschließenden Rasenflächen abschließen, kann wie beschrieben die Radpartie eines Rasenmähers auf den Einlegesteinen abrollen und wird somit ein randnahes Schneiden der Rasenfläche ohne Nachbearbeitung ermöglicht.

Zum Beginn bzw. zum Abschluß einer Verlegereihe aneinander gereihter Einfassungssteine können Einfassungssteine mit einer im wesentlichen waagerechten Abschlußfläche (d.h. ohne Ausnehmung oder Vorsprung) vorgesehen sein. Diese Einfassungssteine weisen gegenüberliegend zur Abschlußfläche eine Ausnehmung oder einen Vorsprung zum Anfügen weiterer Einfassungssteine auf.

Die Neuerung ist anhand von Ausführungsbeispielen in den Zeichnungsfiguren näher erläutert. Es zeigen:
- Fig. 1: eine erste Ansicht eines Einfassungssteins mit Einlegestein,
- Fig. 2: eine Ansicht B des Einfassungssteins nach Fig. 1,
- Fig. 3: eine Ansicht A des Einfassungssteins nach Fig. 1,
- Fig. 4: eine Ansicht A auf einen Einlegestein nach Fig. 1,
- Fig. 5: eine Draufsicht auf aneinander gereihte Einfassungssteine mit eingelegten Einlegesteinen,
- Fig. 6: eine Ansicht einer weiteren Ausführungsform eines Einfassungssteins sowie
- Fig. 7: eine weitere Draufsicht auf aneinander gereihte Einfassungssteine.

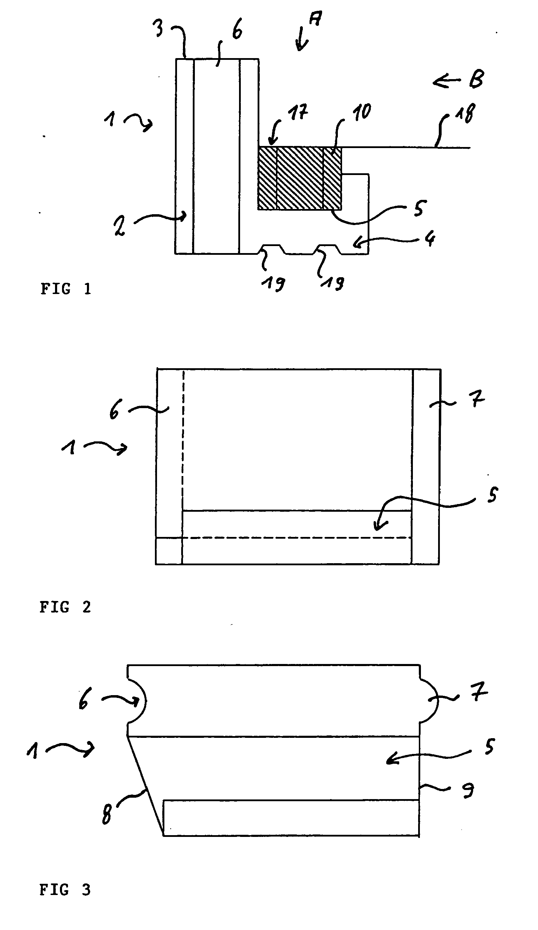

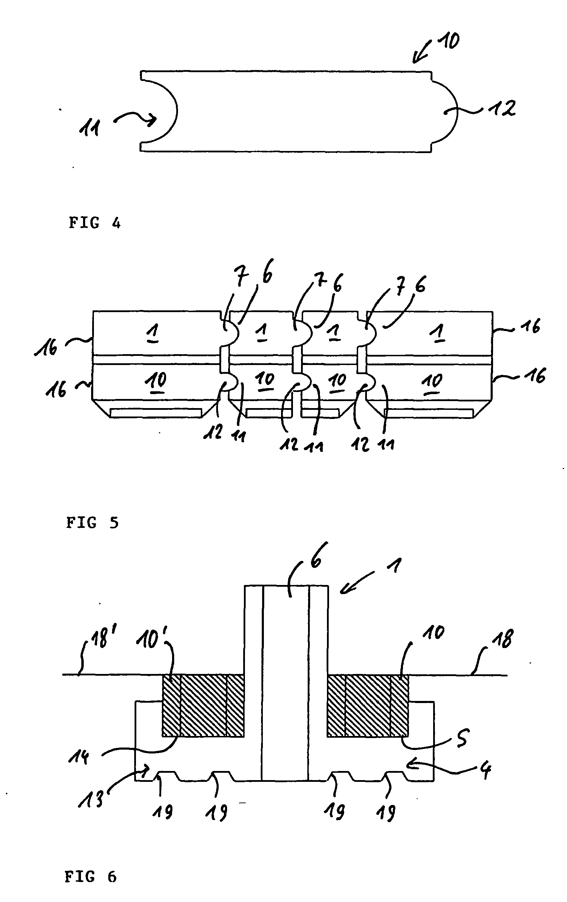

Fig. 1 zeigt einen Einfassungsstein 1 mit einem ersten senkrecht verlaufenden Steinbereich 2 mit einer ersten Oberfläche 3 und einem zweiten waagerecht verlaufenden Steinbereich 4, der L-förmig mit dem ersten Steinbereich 2 verbunden ist und eine Vertiefung 5 aufweist. Der Einfassungsstein 1 besitzt bodenseitige z.B. trapezförmige Vertiefungen 19 zur Verbesserung der Standfestigkeit (vgl. auch Fig. 6). In die Vertiefung 5 ist ein Einlegestein 10 eingelegt, dessen Oberfläche 17 im wesentlichen bündig mit einer angrenzenden Fläche, insbesondere einer Rasenfläche 18 abschließt. Beim Rasenmähen der Rasenfläche 18 können die Räder des Rasenmähers auf der Oberfläche 17 abrollen und es wird ein randnahes Mähen der Rasenfläche 18 ohne erforderliche Nachbearbeitung ermöglicht.

Die Oberfläche 3 des ersten Steinbereichs 2 kann gewölbt ausgeführt sein. Nach weiteren Ausführungsformen kann die Oberfläche 3 weitgehend beliebig, z.B. auch gerade und scharfkantig, gerade und einseitig gefast, gerade und beidseitig gefast etc. ausgeführt sein.

Fig. 2 zeigt eine Längsansicht des Einfassungssteins 1 nach Fig. 1 mit der Oberfläche 3. Diese Oberfläche 3 kann in Längsrichtung wie abgebildet gerade verlaufen aber auch gleichmäßig oder ungleichmäßig geschuppt sein oder sägezahnartige Erhöhungen und Vertiefungen aufweisen.

Der Erfassungsstein 1 nach Fig. 1 und Fig. 2 besitzt Ausnehmungen 6 und Vorsprünge 7. Diese können in korrespondierende Vorsprünge 7 und Ausnehmungen 6 benachbarter Einfassungssteine 1 eingreifen (vgl. Fig. 5).

In der Draufsicht nach Fig. 3 ist eine schräg verlaufende Kante 8 und eine gerade verlaufende Kante 9 des Einfassungssteins 1 abgebildet, welche eine kurvenförmige und winklige Anordnung aufeinanderfolgender Erfassungssteine 1 ermöglichen. Es können auch zwei schräg verlaufende oder zwei gerade Kanten 8, 9 vorgesehen sein (nicht abgebildet). Fig. 4 zeigt eine Draufsicht auf einen Einlegestein 10 mit Vorsprüngen 12 und Ausnehmungen 11 in welche korrespondierende Ausnehmungen 11 und Vorsprünge 12 benachbarter Einlegesteine 10 eingreifen (vgl. Fig. 5).

Wie beschrieben können die Einfassungssteine 1 und Einlegesteine 10 auch Abschlußflächen 16 aufweisen, welche nach Fig. 5 zum Beginn oder Ende einer Reihe von Einfassungssteinen 1 und von Einlegesteinen 10 als Reihenanfang und Reihenende dienen können.

Fig. 6 zeigt einen Einfassungsstein 1 mit einem weiteren waagerecht verlaufenden Steinbereich 13, der eine weitere Vertiefung 14 zur Aufnahme eines weiteren Einlegesteins 10' aufweist. Mit einem derartigen Einfassungsstein 1 gemäß Fig. 3 können benachbarte Rasenflächen 18, 18' voneinander abgetrennt und wie beschrieben besonders komfortabel gemäht werden.

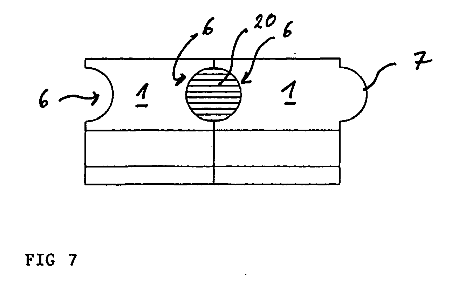

Aus Fig. 7 ein nicht erfindungsgemmäßer Einfassungsstein 1 hervor, der beidseitig Ausnehmungen 6 aufweist, wodurch zwischen zwei Einfassungssteinen 1 ein im Schnitt dargestellter Rundkörper 20 (z.B. ein Zaunpfosten oder der Pfosten einer Wäschespindel) aufgenommen werden kann.

## Patentansprüche

1. Einfassungselement zur Einfassung und Abgrenzung von Rasenflächen oder Pflasterflächen, mit einem Einfassungsstein (1) mit einem ersten, im verlegten zustand senkrecht verlaufenden, Steinbereich (2) sowie einem zweiten waagerecht verlaufenden Steinbereich (4), der senkrecht mit dem ersten Steinbereich (2) verbunden ist, so daß der Einfassungsstein (1) einen L-förmigen Querschnitt aufweist, und mit einem Einlegestein (10) zum Einlegen in eine Vertiefung (5) des Einfassungssteins (1),
**dadurch gekennzeichnet, daß** der erste Steinbereich (2) des Einfassungssteins (1) eine halbkreisförmige Ausnehmung (6) und einen halbkreisförmigen Vorsprung (7) zur Aufnahme korrespondierender halbkreisförmiger Vorsprünge (7) und halbkreisförmiger Ausnehmungen (6) benachbarter Einfassungssteine (1) aufweist und der Einlegestein (10) eine halbkreisförmige Ausnehmung (11) und einen halbkreisförmigen Vorsprung (12) zur Aufnahme korrespondierender halbkreisförmiger Vorsprünge (12) und halbkreisförmiger Ausnehmungen (11) benachbarter Einlegesteine (10) aufweist, um einen formschlüssigen Verbund zwischen verlegten aufeinander folgenden Einfassungssteinen (1) als auch zwischen eingelegten aufeinander folgenden Einlegesteinen (10) zu bilden, wobei benachbarte Einfassungssteine (1) in Kurvenform zueinander verlegbar sind, und wobei der zweite Steinbereich (4) mindestens eine abgeschrägte Kante (8) aufweist um einen bogenförmigen Verlegungsverlauf zu erleichtern.

2. Einfassungselement nach Anspruch 1, wobei der Einlegestein (10) sich über die gesamte Länge des Einfassungssteins (1) erstreckt.

3. Einfassungselement nach Anspruch 1, wobei der Einlegestein (10) sich über die Hälfte der Länge des Einfassungsteins (1) erstreckt.

4. Einfassungselement nach einem der vorherigen Ansprüche, wobei der Einfassungsstein (1) mit einem dritten waagerecht verlaufenden Steinbereich (13) vorgesehen ist, der L-förmig mit dem ersten Steinbereich (2) verbunden ist und eine weitere Vertiefung (14) zur Aufnahme mindestens eines Pflastersteins aufweist.

5. Einfassungselement nach Anspruch 4, wobei die Vertiefungen (5, 14) gegenüberliegend angeordnet sind.

6. Einfassungselement nach Anspruch 4, mit einem weiteren Einlegestein (10') zum Einlegen in die Vertiefung (14) des dritten Steinbereichs (13).

7. Einfassungselement nach einem der vorhergehenden Ansprüche, wobei der Einfassungsstein (1) als Anfangs- oder Endstein ausgebildet ist und eine Abschlußfläche (16) ohne Ausnehmung oder Vorsprung aufweist.

## Claims

1. Edging element for bordering and defining lawn areas or paved areas, comprising an edging stone (1) with a first stone region (2) which extends vertically in the laid state and with a second, horizontally extending stone region (4) which is connected perpendicularly to the first stone region (2) such that the edging stone (1) has an L-shaped cross section, and comprising an inlay stone (10) for inserting in a depression (5) of the edging stone (1), **characterized in that** the first stone region (2) of the edging stone (1) has a semicircular recess (6) and a semicircular projection (7) for accommodating corresponding semicircular projections (7) and semicircular recesses (6) of adjacent edging stones (1), and the inlay stone (10) has a semicircular recess (11) and a semicircular projection (12) for accommodating corresponding semicircular projections (12) and semicircular recesses (11) of adjacent inlay stones (10), in order to form a positive connection between successively laid edging stones (1) and also between successively inserted inlay stones (10), wherein adjacent edging stones (1) can be laid in a curved shape relative to one another, and wherein the second stone region (4) has at least one bevelled edge (8), in order to facilitate a curved laying profile.

2. Edging element according to Claim 1, wherein the inlay stone (10) extends over the entire length of the edging stone (1).

3. Edging element according to Claim 1, wherein the inlay stone (10) extends over half the length of the edging stone (1).

4. Edging element according to one of the preceding claims, wherein the edging stone (1) is provided with a third, horizontally extending stone region (13) which is connected in an L-shaped manner to the first stone region (2) and has a further depression (14) for accommodating at least one paving stone.

5. Edging element according to Claim 4, wherein the depressions (5, 14) are arranged oppositely.

6. Edging element according to Claim 4, comprising a further inlay stone (10') for inserting in the depression (14) of the third stone region (13).

7. Edging element according to one of the preceding claims, wherein the edging stone (1) is formed as a starting or end stone and has a terminal face (16) without a recess or projection.

## Revendications

1. Elément de bordure pour border et délimiter des pelouses ou des surfaces pavées, comprenant une pierre de bordure (1) comprenant une première partie de pierre (2) s'étendant verticalement dans l'état posé, ainsi qu'une deuxième partie de pierre (4) s'étendant horizontalement, qui est connectée perpendiculairement à la première partie de pierre (2) de sorte que la pierre de bordure (1) présente une section transversale en forme de L, et comprenant une pierre d'encastrement (10) pour l'encastrement dans un renfoncement (5) de la pierre de bordure (1),
**caractérisé en ce que**
la première partie de pierre (2) de la pierre de bordure (1) présente un évidement (6) de forme semi-circulaire et une saillie (7) de forme semi-circulaire pour recevoir des saillies (7) de forme semi-circulaire et des évidements (6) de forme semi-circulaire correspondants de pierres de bordure (1) adjacentes, et la pierre d'encastrement (10) présente un évidement (11) de forme semi-circulaire et une saillie (12) de forme semi-circulaire pour recevoir des saillies (12) de forme semi-circulaire et des évidements (11) de forme semi-circulaire correspondants de pierres d'encastrement (10) adjacentes, afin de former un assemblage par coopération de forme entre des pierres de bordure (1) posées successivement et également entre des pierres d'encastrement (10) posées successivement, les pierres de bordure (1) adjacentes pouvant être posées les unes par rapport aux autres suivant une forme courbe, et la deuxième partie de pierre (4) présentant au moins une arête biseautée (8) pour faciliter la ligne de pose suivant une forme courbe.

2. Elément de bordure selon la revendication 1, dans lequel la pierre d'encastrement (10) s'étend sur toute la longueur de la pierre de bordure (1).

3. Elément de bordure selon la revendication 1, dans lequel la pierre d'encastrement (10) s'étend sur la moitié de la longueur de la pierre de bordure (1).

4. Elément de bordure selon l'une quelconque des revendications précédentes, dans lequel la pierre de bordure (1) est pourvue d'une troisième partie de pierre (13) s'étendant horizontalement, qui est connectée en forme de L à la première partie de pierre (2) et qui présente un renfoncement (14) supplémentaire pour recevoir au moins une pierre de pavage.

5. Elément de bordure selon la revendication 4, dans lequel les renfoncements (5, 14) sont disposés en regard.

6. Elément de bordure selon la revendication 4, comprenant une pierre d'encastrement (10') supplémentaire pour l'encastrement dans le renfoncement (14) de la troisième partie de pierre (13).

7. Elément de bordure selon l'une quelconque des revendications précédentes, dans lequel la pierre de bordure (1) est réalisée sous forme de pierre de début ou de fin et présente une surface de terminaison (16) sans évidement ni saillie.
